# EUROPEAN PATENT APPLICATION

(11) **EP 2 112 036 A2**
(43) Date of publication of application: **28.10.2009**
(21) Application number: 08013038.8
(22) Date of filing: 18.07.2008
(51) Int. Cl.: B60R 25/00

(54) **Passive entry system and method for performing function thereof**

(30) Priority: 22.04.2008 KR 20080037095
(71) Applicant: Yang, Jae Woo, Gyeongsangnam-Do (KR)
(72) Inventor: Ko, Jae Pyung, Haeundae-gu Busan (KR); Kim, Young Tak, Nam-gu, Busan 608-776 (KR); Lee, Kyoung Moon, Seo-gu,, Busan 602-832 (KR); Kang, Dong Seok, Geumjeong-gu, Busan (KR); Ko, Ae Kyoung, Sasang-gu, Busan (KR)
(74) Representative: Beier, Ralph

(57) **Abstract**

Provided are a passive entry system for changing a scan method to reduce battery consumption of a smart key and a method for performing a function thereof. In the passive entry system, a smart key ECU periodically transmits a low-frequency scan signal for detecting the smart key. When the smart key being in a slip state is located within a receiving radius of the scan signal, the smart key receives the scan signal and is converted into an active state. Battery consumption of the smart key can be reduced because the smart key normally being in the slip state is converted into the active state when receiving the scan signal from the smart key ECU. Furthermore, the smart key is converted into the active state only within the low-frequency scan signal receiving radius formed near an automobile and requests the smart key ECU to perform a function of the automobile, for example, a function of closing/opening doors. Accordingly, a reliable passive entry system can be achieved.

## Description

### BACKGROUND OF THE INVENTION

### Field of the Invention

The present invention relates to a passive entry system and a method for performing a function thereof, and more particularly, to a passive entry system for remotely controlling an automobile function through wireless communication between a smart key and a smart key electronic control unit (ECU) and a method for performing a function thereof.

### Description of the Related Art

A passive entry system performs passive entry and passive start functions. The passive entry function allows a driver to close/open automobile doors conveniently. The passive entry function is a triggering method for allowing a user who is carrying a smart key to close/open automobile doors. In this method, when a button of a door handle is pushed or a touch is made through a capacitive sensor, a smart key ECU drives a low frequency antenna to transmit a low frequency signal to the smart key. The smart key wakes up and operates when receiving the low frequency signal and transmits data to the smart key ECU through a high frequency when receiving normal data. Here, when normal wireless transmission and receiving are carried out, the smart key ECU closes/opens the automobile doors.

Although the passive entry system using the button of the door handle or the sensor can be produced with the door handle attached thereto when an automobile manufacturing company directly produces and sells the passive entry system, it is not easy to modify the door handle of the existing automobile or add a door handle to the existing automobile. Accordingly, to add the passive entry function of the passive entry system to the existing automobile, it is required to automatically perform wireless RF wireless communication between a smart key ECU attached to the inside of the automobile and a smart key carried by a driver to close/open automobile doors when the driver carrying the smart key approaches the automobile within a predetermined distance from the automobile without carrying out triggering through the door handle of the automobile. In this case, to confirm the driver who approaches the automobile, the automobile continuously transmits a high frequency scan signal periodically and the smart key located within a high frequency receiving distance from the automobile receives the high frequency scan signal and transmits a high frequency signal to perform authentication (determination of effectiveness) between the smart key ECU and the smart key such that the smart key ECU closes/opens the automobile doors.

However, since the smart key ECU and the smart key perform authentication through RF communication, the communication is carried out within tens of meters from the automobile to increase a transmitting/receiving distance. Accordingly, the doors are opened/closed even when the driver just passes by the automobile without opening/closing the doors to result in a problem in the security of the automobile. Furthermore, the product price increases because the smart key must have a function of receiving and transmitting high frequency signals and the battery of the smart key is rapidly discharged because the smart key must be in a wake-up state in order to continuously receive high frequency signals. Accordingly, there is needed a system capable of improving security and reducing smart key battery consumption while easily attaching a smart key system to the existing automobile.

### SUMMARY OF THE INVENTION

It is an object of the present invention to change a scan method to reduce battery consumption of a smart key.

It is another object of the present invention to perform a function such as a door closing/opening function according to whether a smart key user approaches an automobile.

To achieve the objects of the present invention, there is provided a passive entry system in which a smart key ECU having battery capacity greater than that of a smart key periodically scans the smart key located near the smart key ECU and a method for performing a function thereof.

The method for performing a function of a passive entry system according to the present invention comprises a scanning step in which a smart key ECU periodically transmits a low-frequency scan signal for detecting a smart key and an activation step in which the smart key being in a slip state receives the scan signal and is converted to an active state when located within a receiving radius of the scan signal.

The passive entry system according to the present invention comprises a smart key ECU periodically transmitting a low-frequency scan signal in order to detect a smart key and the smart key receiving the scan signal and converted from a slip state to an active state when located within a receiving radius of the scan signal.

The smart key ECU of the passive entry system according to the present invention comprises a low-frequency transmitter, a high-frequency receiver and a controller. The low-frequency transmitter periodically transmits a scan signal for detecting a smart key. The high-frequency receiver receives a function execution request signal including ID data of the smart key, which is output from the smart key that receives the scan signal. The controller confirms the effectiveness of the ID data and performs a requested function when the effectiveness of the ID data is confirmed.

The smart key of the passive entry system according to the present invention comprises a low-frequency receiver, a controller and a high-frequency transmitter. The low-frequency receiver receives a scan signal periodically transmitted from a smart key ECU. The controller is converted from a slip state to an active state when receiving the scan signal and outputs a function execution request signal that includes ID data and requests the smart key ECU to perform a specific function to the smart key ECU. The high-frequency transmitter transmits the function execution request signal to the smart key ECU.

According to the present invention, the smart key is in the slip state and the smart key ECU that has battery capacity greater than that of the smart key periodically scans the smart key located near the smart key ECU to reduce battery consumption of the smart key and extend a period of changing the battery of the smart key.

The smart key is converted from the slip state into the active state when it continuously receives the scan signal by a predetermined number of times in the slip state, and thus the smart key can be restrained from wrongly operating.

Since the smart key ECU scans the smart key with a low-frequency scan signal having a receiving radius smaller than a high-frequency scan signal, the smart key is converted into the active state when approaching the corresponding automobile to request the smart key ECU to perform a predetermined function, for example, a function of opening doors. Accordingly, a reliable passive entry system can be achieved.

Moreover, a plurality of low-frequency transmission antennas can be attached to the smart key ECU to extend the scan signal receiving radius and rapidly detect the smart key located within the scan signal receiving radius.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing a passive entry system according to the present invention;
FIG. 2 is a block diagram of the passive entry system according to an embodiment of the present invention;
FIGS. 3A, 3B and 3C are views showing the waveforms of scan signals transmitted from a smart key ECU;
FIG. 4 is a flow chart of a method for performing a function of the passive entry system according to an embodiment of the present invention; and
FIG. 5 is a view showing the waveform of a function execution request signal output from a smart key in response to a scan signal transmitted from the smart key ECU according to the method for performing a function of the passive entry system shown in FIG. 4.

### DETAILED DESCRIPTION OF THE PREFERRED EMBODIMENTS

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

### Passive entry system

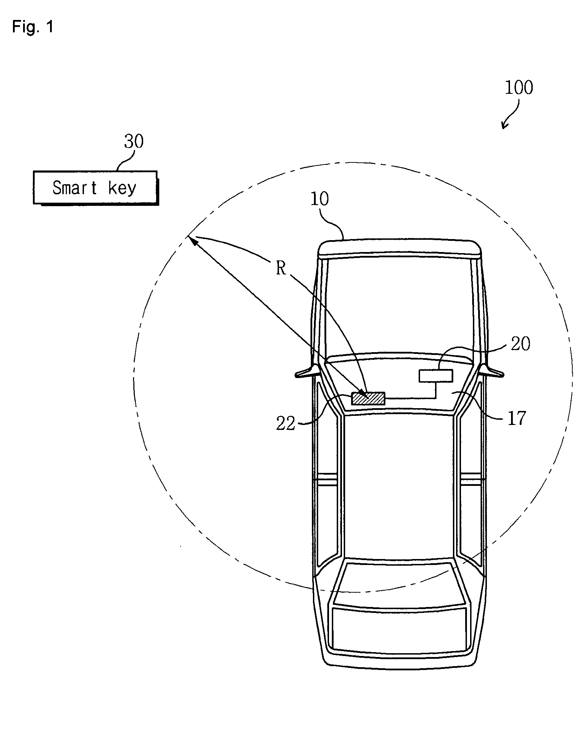

Referring to FIGS. 1, 2, 3A, 3B and 3C, a passive entry system 100 according to an embodiment of the present invention includes a smart key electronic control unit (ECU) 20 attached to an automobile 10 and a smart key 30 that can be carried by a user and perform wireless communication with the smart key ECU 20. The user carrying the smart key 30 can remotely control functions of the automobile 10 through wireless communication with the smart key ECU using low-frequency and high-frequency signals. The smart key 30 is registered through authentication performed by the smart key ECU 20.

The functions of the automobile 10 which can be remotely controlled through the smart key 30 include functions of starting and stopping the engine of the automobile 10 through the control of an engine module 11, functions of closing and opening doors through the control of a door module 12, and functions of setting and canceling an antitheft function through the control of an antitheft module 15. In addition, various functions of the automobile 10 can be controlled through the smart key 30.

The smart key ECU 20 includes an LF transmitter 21, an HF receiver 25, a first controller 23 and a first battery 29 and is set in the automobile 10.

The LF transmitter 21 periodically transmits a scan signal 24 for detecting the smart key 20 through at least one LF transmission antenna 22. The LF transmitter 21 transmits the scan signal 24 in a frequency band of 120 to 140 kHz. The LF transmission antenna 22 can be attached to the upper part of a windshield 17 of the automobile 10. Otherwise, the LF transmission antenna 22 can be attached to an appropriate point inside or outside the automobile 10. The receiving radius R of the scan signal 24 is about 3m.

The high-frequency receiver 25 receives a function execution request signal 34 output from the smart key 30 that receives the scan signal 24 through the high-frequency receiving antenna 27. The high-frequency receiver 25 outputs the received function execution request signal 34 to the first controller 23. The high-frequency receiver 25 receives signals of frequency bands in the range of 300 to 440MHz.

The first controller 23 is a microprocessor that controls the overall operation of the smart key ECU 20. The first controller 23 performs a requested function corresponding to the received function execution request signal 34. Here, the first controller 23 confirms the effectiveness of ID data of the smart key 30, which is included in the function execution request signal 34 and performs the requested function when the effectiveness is confirmed.

The first battery 29 provides power to respective components of the smart key ECU 20. Here, the first battery 29 is included in the automobile 10.

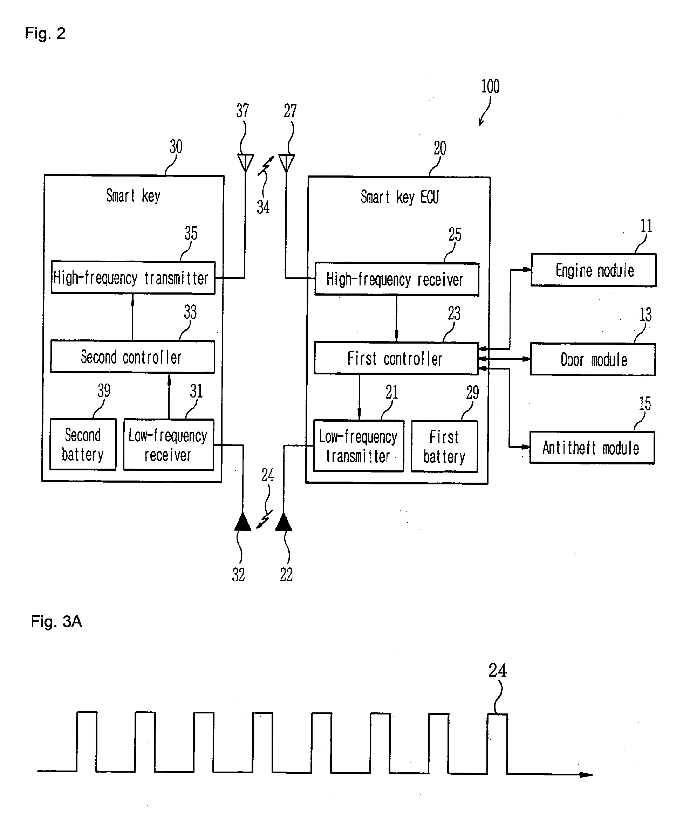

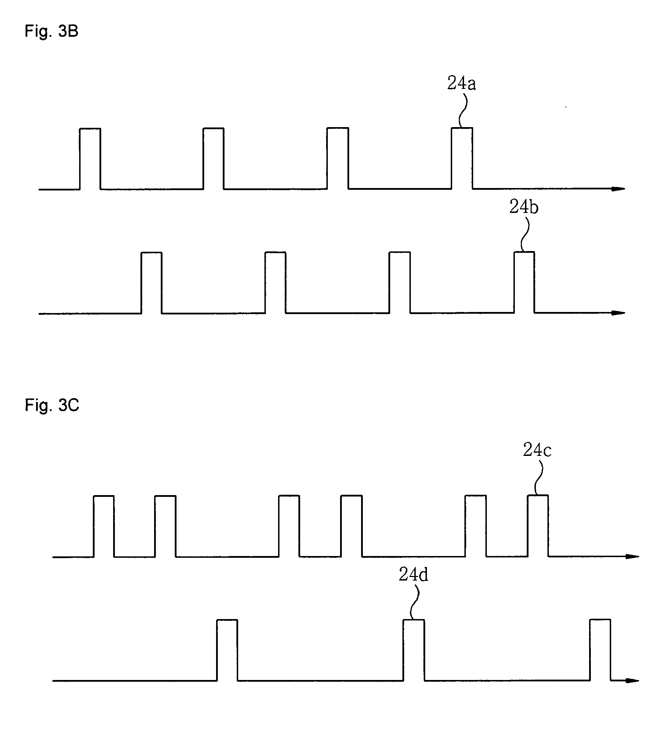

The low-frequency transmitter 21 transmits the scan signal through at least one low-frequency transmission antenna 22. The low-frequency transmitter 21 can include a plurality of low-frequency antennas 22 in order to extend an area where the scan signal 24 can be received. For example, the low-frequency transmitter 21 can transmit the scan signal 24 through a single low-frequency transmission antenna at a predetermined period, as shown in FIG. 3A. Furthermore, the low-frequency transmitter 21 can alternately transmit scan signals 24a and 24b having the same period through two low-frequency transmission antennas, as shown in FIG. 3B. Moreover, the low-frequency transmitter 21 can alternately transmit scan signals 24c and 24d having different periods through two low-frequency transmission antenna, as shown in FIG. 3C. FIG. 3B shows that two low-frequency transmission antennas alternately transmit the scan signals 24a and 24b having the same period in the ratio of 1:1 and FIG. 3C shows that two low-frequency transmission antennas alternately transmit the scan signals 24c and 24d having different periods in the ratio of 1:2. However, the present invention is not limited thereto and the scan signals can be transmitted in various ratios.

The smart key ECU 20 can further include a first memory. The first memory is included in the first controller 23 or additionally provided. The first memory stores a program required to control the operation of the smart key ECU 20 and data generated when the program is executed and includes at least one volatile memory and nonvolatile memory. The first memory stores an executive program required to process a remote control signal through wireless communication with the smart key 30 and ID data of the smart key 30, generated when the executive program is executed.

The smart key 30 includes a low-frequency receiver 31, a second controller 33, a high-frequency transmitter 35, and a second battery 39.

The low-frequency receiver 31 receives the scan signal 24 through a low-frequency receiving antenna 32 when located in the receiving radius R of the scan signal 24 periodically transmitted from the smart ECU 20. The low-frequency receiver 31 outputs the received scan signal 24 to the second controller 23. A 3-axis antenna with X-, Y- and Z-axes is used as the low-frequency antenna 32 in order to receive a forward low-frequency signal. The low-frequency receiver 31 can receive signals of frequency bands in the range of 100 to 300kHz.

The second controller 33 is a microprocessor that controls the overall operation of the smart key 30. The second controller 33 is converted from a slip state to an active state when receiving the scan signal 24 and outputs the function execution request signal 34 that requests the smart key ECU 20 to perform a specific function to the high-frequency transmitter 35. In the active state, the second controller 33 receives the scan signal 24 to wake up and trigger.

The high-frequency transmitter 35 transmits the function execution request signal 34 output from the second controller 33 to the smart key ECU 20 through a high-frequency transmission antenna 37. The high-frequency transmitter 35 transmits signals of frequency bands in the range of 300 to 440MHz. Here, the function execution request signal 34 includes the ID data of the smart key 30.

The second battery 39 provides power to the respective components of the smart key 30.

The second controller 33 is converted from the slip state to the active state when continuously receiving the scan signal 24 by a predetermined number of times in order to restrain the smart key 30 from wrongly operating. That is, the second controller 33 may miss the scan signal 24 according to the position of the smart key 30 with respect to the smart key ECU 20 after initially receiving the scan signal 24 through the low-frequency receiver 31.

The smart key 30 can further include a second memory. The second memory can be included in the second controller 33 or additionally provided. The second memory stores a program required to control the operation of the smart key 30 and data generated when the program is executed and includes at least one volatile memory and nonvolatile memory. The second memory stores an executive program required to remotely control the function of the automobile 10 and data generated when the executive program is executed.

As described above, in the passive entry system 100 according to the present invention, the smart key 30 is in the slip state and the smart key ECU 20 having battery capacity greater than that of the smart key 30 periodically scans the smart key located near the smart key ECU 20 to reduce power consumption of the second battery 39 and extend a period of changing the second battery 39.

The smart key 30 is converted to the active state when continuously receiving the scan signal by a predetermined number of times in the slip state, and thus the smart key 30 can be restrained from wrongly operating. Since the smart key ECU 2 scans the smart key using the low-frequency scan signal 24, the receiving radius R of the scan signal is smaller than that of a conventional high-frequency scan signal. Accordingly, the smart key 30 is converted to the active state when approaching the automobile 10 to request the smart key ECU 20 to perform a predetermined function, and thus the reliable passive entry system 100 can be achieved. In addition, a plurality of low-frequency transmission antennas are attached to the smart key ECU 20 to extend the receiving radius R of the scan signal 24 such that the smart key 30 located within the receiving radius R can be rapidly detected.

### Method for performing the function of the passive entry system

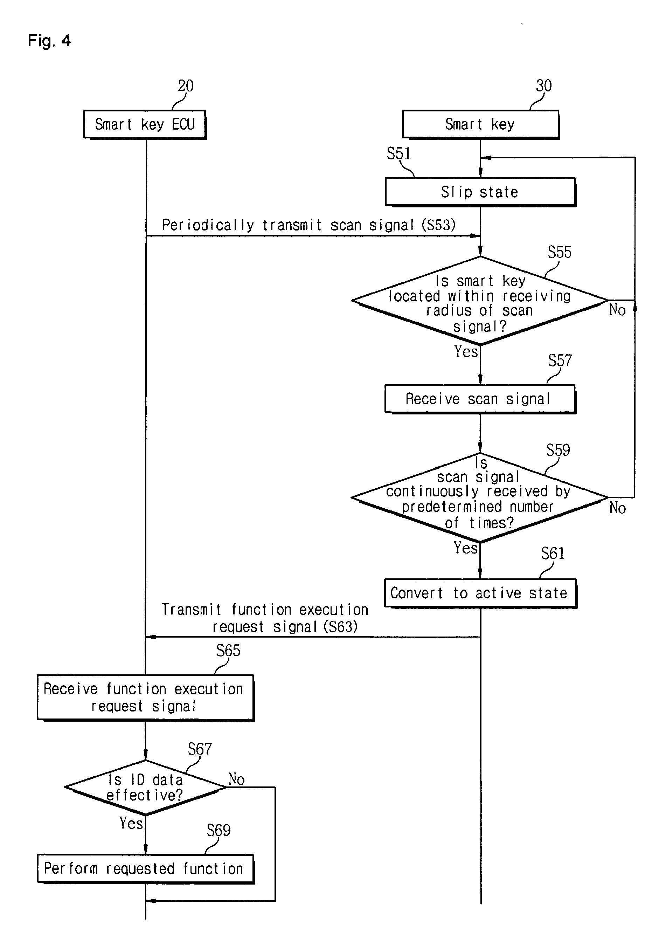

A method for performing a function of the passive entry system 100 according to an embodiment of the present invention will now be explained with reference to FIGS. 2, 4 and 5. Although a function of closing/opening doors is exemplified in this embodiment, the function of the passive entry system is not limited thereto.

The smart key 30 carried by a user is in a slip state in operation S51 and the smart key ECU 20 periodically transmits the low-frequency scan signal 24 in order to detect the smart key 30 in operation S53. The scan signal 24 transmitted from the smart key ECU 20 has a predetermined receiving radius (R of FIG. 1).

The smart key 30 determines whether it is located within the receiving radius of the scan signal 24 in operation S55.

When it is determined that the smart key 30 is located outside the receiving radius of the scan signal 24 in operation S55, the smart key 30 maintains the slip state. The smart key ECU 20 maintains a door-closing state.

When it is determined that the smart key 30 is located within the receiving radius of the scan signal 24 in operation S55, the smart key 30 receives the scan signal 24 through the low-frequency receiver 31 in operation S57. Subsequently, the smart key 30 determines whether the scan signal 24 is continuously received by a predetermined number of times in operation S59.

When it is determined that the scan signal 24 is received by less than the predetermined number of times in operation S59, the smart key 30 maintains the slip state in operation S51.

When it is determined that the scan signal 24 is continuously received by the predetermined number of times in operation S59, the smart key 30 is converted from the slip state to an active state in operation S61. The activated smart key 30 transmits the function execution request signal 34 that requests the smart key ECU 20 to perform a specific function to the smart key ECU 20 through the high-frequency transmitter 35 in operation S63. Here, the function execution request signal 34 includes the ID data of the smart key 30.

The smart key ECU 20 receives the function execution request signal 34 through the high-frequency receiver 35 in operation S65. The smart key ECU 20 confirms the effectiveness of the ID data of the smart key 30, which is included in the received function execution request signal 34, in operation S67.

When it is confirmed that the ID data of the smart key 30 is effective in operation S67, the smart key ECU 20 performs a requested function corresponding to the received function execution request signal 34 in operation S69. Here, the requested function can be a door opening function and the smart key ECU 20 opens doors.

When it is confirmed that the ID data of the smart key 30 is not effective in operation S67, the smart key ECU 20 does not perform the requested function corresponding to the received function execution request signal 34. That is, the smart key ECU 20 maintains the closed state of doors.

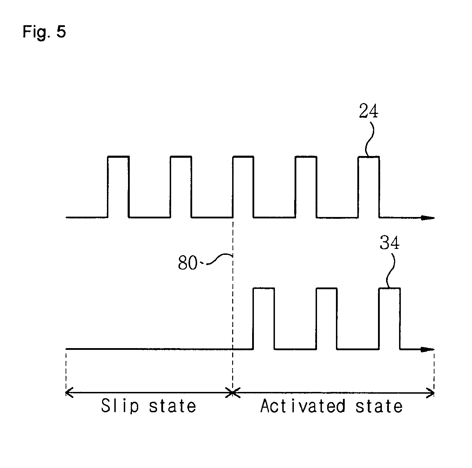

An operation of performing a function according to the current embodiment is explained with reference to FIG. 5. FIG. 5 shows a case that the low-frequency transmitter transmits the scan signal 24 through a single low-frequency transmission antenna.

Referring to FIGS. 2 and 5, the smart key ECU 20 periodically transmits the scan signal 24 through the low-frequency transmitter 21. The smart key 30 maintains the slip state when it is not located within the receiving radius of the scan signal 24. The smart key 30 is converted from the slip state to the active state and transmits the function execution request signal 34 to the smart key ECU 20 through the high-frequency transmitter 35 when located within the receiving radius of the scan signal 24. Reference numeral 80 represents a point at which the smart key 30 initially receives the scan signal 24.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method for performing a function of a passive entry system, comprising:
a scanning step in which a smart key ECU periodically transmits a low-frequency scan signal for detecting a smart key; and
an activation step in which the smart key being in a slip state receives the scan signal and is converted to an active state when located within a receiving radius of the scan signal.

2. The method according to claim 1, wherein the scanning step transmits the scan signal through at least one low-frequency antenna.

3. The method according to claim 2, wherein the scanning step transmits scan signals through a plurality of low-frequency antennas, and the periods of the scan signals transmitted through the plurality of low-frequency antennas are identical to or different from each other in the ratio of one to an integer.

4. The method according to claim 2, wherein the activation step converts the smart key to the active state when the smart key continuously receives the scan signal by a predetermined number of times.

5. The method according to claim 4, further comprising:
a function execution request step in which the activated smart key transmits a high-frequency function execution request signal that requests the smart key ECU to perform a specific function to the smart key ECU; and
a function execution step in which the smart key ECU receives the function execution request signal and performs a requested function.

6. The method according to claim 5, wherein the function execution step confirms the effectiveness of ID data of the smart key, which is included in the received function execution request signal, and performs the requested function when the effectiveness is confirmed.

7. The method according to claim 6, wherein the function performed in the function execution step includes at least one of functions of starting an engine, stopping the engine, closing doors, opening the doors, setting an antitheft function and canceling the antitheft function.

8. A passive entry system comprising:
a smart key ECU periodically transmitting a low-frequency scan signal in order to detect a smart key; and
the smart key receiving the scan signal and converted from a slip state to an active state when located within a receiving radius of the scan signal.

9. The passive entry system according to claim 8, wherein the smart key ECU transmits the scan signal through at least one low-frequency antenna.

10. The passive entry system according to claim 8, wherein the smart key ECU transmits scan signals through a plurality of low-frequency antennas, and the periods of the scan signals transmitted through the plurality of low-frequency antennas are identical to or different from each other in the ratio of one to an integer.

11. The passive entry system according to claim 9, wherein the smart key is converted to the active state when continuously receiving the scan signal by a predetermined number of times in the slip state.

12. The passive entry system according to claim 11, wherein the activated smart key transmits a high-frequency function execution request signal that requests the smart key ECU to perform a specific function to the smart key ECU, and the smart key ECU receives the function execution request signal and performs a requested function.

13. The passive entry system according to claim 12, wherein the smart key ECU confirms the effectiveness of ID data of the smart key, which is included in the received function execution request signal, and performs the requested function when the effectiveness is confirmed.

14. The passive entry system according to claim 13, wherein the function includes at least one of functions of starting an engine, stopping the engine, closing doors, opening the doors, setting an antitheft function and canceling the antitheft function.

15. A smart key ECU of a passive entry system, comprising:
a low-frequency transmitter periodically transmitting a scan signal for detecting a smart key;
a high-frequency receiver receiving a function execution request signal including ID data of the smart key, which is output from the smart key that receives the scan signal; and
a controller confirming the effectiveness of the ID data and performing a requested function when the effectiveness of the ID data is confirmed.

16. A smart key of a passive entry system, comprising:
a low-frequency receiver receiving a scan signal periodically transmitted from a smart key ECU;
a controller converted from a slip state to an active state when receiving the scan signal to output a function execution request signal that requests the smart key ECU to perform a specific function and includes ID data to the smart key ECU; and
a high-frequency transmitter transmitting the function execution request signal to the smart key ECU.
